Europäisches Patentamt

European Patent Office

Office européen des brevets

(11) Publication number: 0 168 117

A1

# (12) EUROPEAN PATENT APPLICATION

(21) Application number: 85201168.3

(22) Date of filing: 11.07.85

(51) Int. Cl.⁴: **A 01 J 27/00**

(30) Priority: 11.07.84 NL 8402196

(43) Date of publication of application:
15.01.86 Bulletin 86/3

(84) Designated Contracting States:
AT BE CH DE FR GB IT LI LU NL SE

(71) Applicant: MACHINEFABRIEK JOHs ABERSON B.V.
Postbus 2
NL-8120 AA Olst(NL)

(72) Inventor: Hofs, Bernardus Theodorus
Oude Deventerweg 23
NL-7451 CM Holten(NL)

(74) Representative: van der Beek, George Frans et al,
Nederlandsch Octrooibureau Johan de Wittlaan 15 P.O.
Box 29720
NL-2502 LS 's-Gravenhage(NL)

(54) Device for the removal of the rind from a cheese.

(57) Device for removing rind from cheese by means of independently driven cylindrical cutting element (31, 32) preferably of the type of a metal milling cutter (23), which elements are placed in overlapping positions along top face and sides of a cheese, each element being mounted in a single swivel arm (15) which swings about shafts (16) extending transversely to the direction of movement and parallel to the cheese faces to be treated, which arms (15) are free to rotate about a shaft (17) which coincides with the longitudinal axis of the arm (15) and extends at a right angle to the swivelling shaft (17).

Fig-1

Device for the removal of the rind from a cheese

The invention relates to a device for the removal of the rind from a cheese, comprising a stand with a table to support the cheese to be treated, said table being movable along a track in the stand, which is also provided with several derinding elements, each consisting of an essentially cylindrical member with several cutting edges distributed over the periphery, and with a supporting element on either side of each cylindrical member, said cylindrical members being drivable and rotating then about shafts at right angles to the direction of movement of the table, while the derinding elements are thereby fixed to arms so as to swivel towards or away from the surface of the cheese to be treated, said arms themselves being swivellable about shafts which are also at right angles to the direction of movement of the table, and several derinding elements being set up in succession with overlapping of their respective tracks in such a way that a group of derinding elements can process one entire face of the cheese.

Such a device is known from Dutch Patent Application 7,713,110, which has been laid open for inspection. In this known device the derinding elements - in particular the cylindrical members provided with cutting edges and the supporting elements fitted on either side thereof and designed as discs - are disposed in groups on a flexible driving shaft. Each flexible driving shaft is suspended from swivelling arms at several points situated between the derinding elements. The cylindrical members disposed on a flexible shaft are driven by said shaft. This produces an adaptation to the surface of the cheese to be treated, so that curves and the like can be followed.

The purpose of any derinding device is to remove the rind completely and to cut off as little cheese as possible, preferably none at all. This has not yet been achieved with the known devices, and the object of the invention is therefore to bring about a further improvement.

This object is achieved according to the invention in the first place in that each derinding element is an independent element with its own single swivel arm to which the derinding element is fixed so as to swivel freely about a shaft which coincides with the longitudinal axis of the arm, and which is at right angles to the swivelling shaft, and each cylindrical member with cutting edges of each derinding element is independently drivable in such a way that the freedom of movement of the derinding element relative to the swivelling shaft and relative to the shaft standing at right angles thereto is not impeded.

While in the known device all derinding elements located on one flexible shaft could affect each other and a curved face was essentially treated according to a polygonal face, according to the invention now the derinding elements are individual elements, each of which independently adapts to the surface of the cheese at the track of the particular derinding element. Each cylindrical member provided with cutting edges has its own drive.

This drive can consist of a built-in motor which can be provided electrically, hydraulically or pneumatically with power via flexible connections, but it is preferably a mechanical drive with each cylindrical member having its own flexible drive shaft, which preferably runs via a long curved track from a drive mechanism to the particular derinding element. Such a long flexible drive shaft does not impede the freedom of movement of the derinding elements. The latter are themselves held in contact with the face to be worked either by their own weight or by spring pressure. Driving by means of flexible shafts also has the advantage that it is simple and does not involve any risk of contamination of the cheese being treated.

While in the known device cylindrical members are used with four cutting knives equally distributed over the circumference and projecting slightly beyond, it has now surprisingly been found possible according to the invention to use an ordinary metal cutter, and it is preferable to use a metal milling cutter of the type with series of helical cutting teeth whose cutting planes overlap in planes at right angles to the axis of rotation. An example of such a cutter is a hollow mill of the type marketed by Strassmann.

The use of milling cutters means that derinding takes place with very small cutting depths. The stress on the cheese itself is very slight and is evenly distributed. The cheese to be worked is therefore not subjected to stress fluctuations or shocks and as a result it is better possible than otherwise to hold the cheese in place on the table, since the table has a porous top face and the space underneath can be connected to a vacuum source.

The device is also designed in such a way that the derinding elements operating on the top face of a cheese are placed in a frame which can move up and down vertically.

This is important for the return movement of the table when it moves to and fro in a straight line and is important for the correct height setting, which can be controlled by measuring the thickness of the cheese beforehand, for example with an electric eye.

According to the invention, the derinding elements gripping the side edge(s) can also be supported in a frame which is movable crosswise in such a way that the derinding elements can be moved separately for each side edge. It is preferable here to have one of the frames such that it can be fixed adjustably, while the other can move to an fro from its working position to a position in which the passage is open, and back from there.

According to the invention, the design is preferably such that the frame of the top derinding elements or the frame or frames of the derinding elements operating at the side have several supports situated crosswise to the direction of movement of the table at intervals after each other       ,and disposed on each of these supports are one or more derinding elements which can slide and be fixed in the crosswise direction. This makes it possible to set up the individual derinding elements in such a way in the throughput direction one after the other that the processing tracks of the respective elements overlap.

The device according to the invention is particularly intended for the processing of cube-shaped cheeses, i.e. cheeses with flat top faces and flat side faces. The device is then preferably designed so that the table can move to and fro and means are provided for turning over a partially worked cheese, and if necessary turning through $90^{\circ}$. Means for turning over a cheese can per se be known means of the type familiar in conveyor technology. If the cheese has to be treated again by the same device, complete turning over is necessary, so that the untreated bottom face becomes the top face and a turn through $90^{\circ}$ is necessary to permit working of the other two side faces.

It is also possible to position two devices in succession and to design the turning-over means in such a way that they turn cheese emerging from the outlet of the first device and deposit it at the inlet of the next device. If the two devices are standing at an angle of $90^{\circ}$ here, the cheese need only be turned over and not turned round.

The device according to the invention is, however, also suitable for non-cube-shaped cheeses, such as disc-shaped cheeses which have a circular periphery. For working of the top face the rectilinear movement can again be used, and for working the side faces there can be a rotary movement of a table, which is also designed as a rotary table. Of course, the derinding elements working on the top face can also be set up in a frame in such a way that during the turning of the cheese for working of the side faces the top face is also processed. Successive devices for processing top face and separately processing the side faces are, of course, also conceivable.

The invention will now be explained in greater detail with reference to the drawings.

Fig. 1 shows an embodiment of the device according to the invention, in side view.

Fig. 2 shows a top view of the device of Fig. 1, and

Fig. 3 is a side view of the device of Fig. 1.

Fig. 4 is a cross section through a derinding element of the device of Figs. 1 to 3, and

Fig. 5 is a side view of the device of Fig. 4, where in the lower section another variant is indicated.

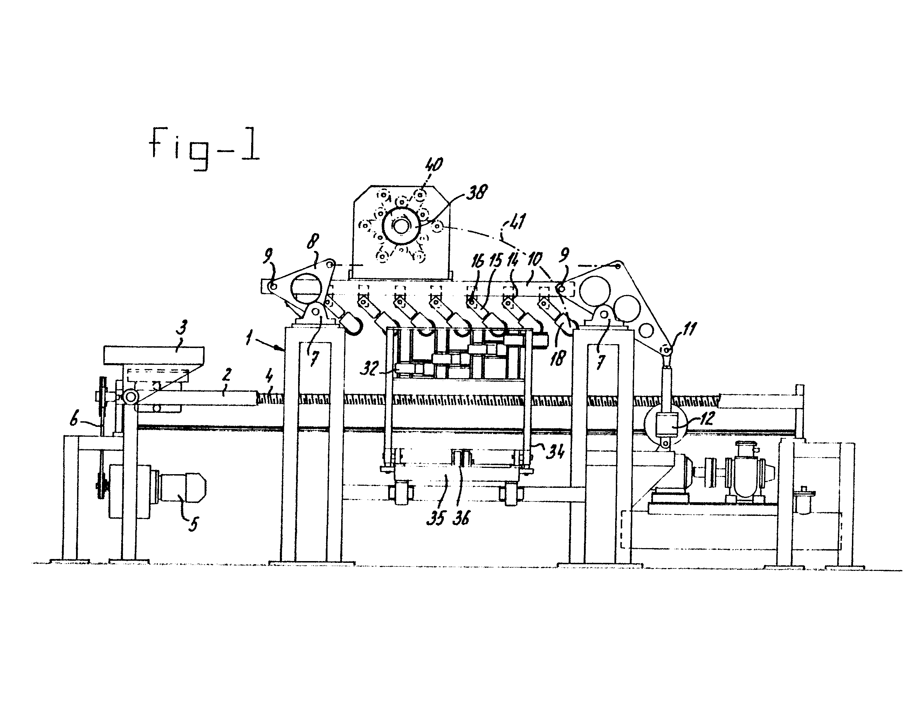

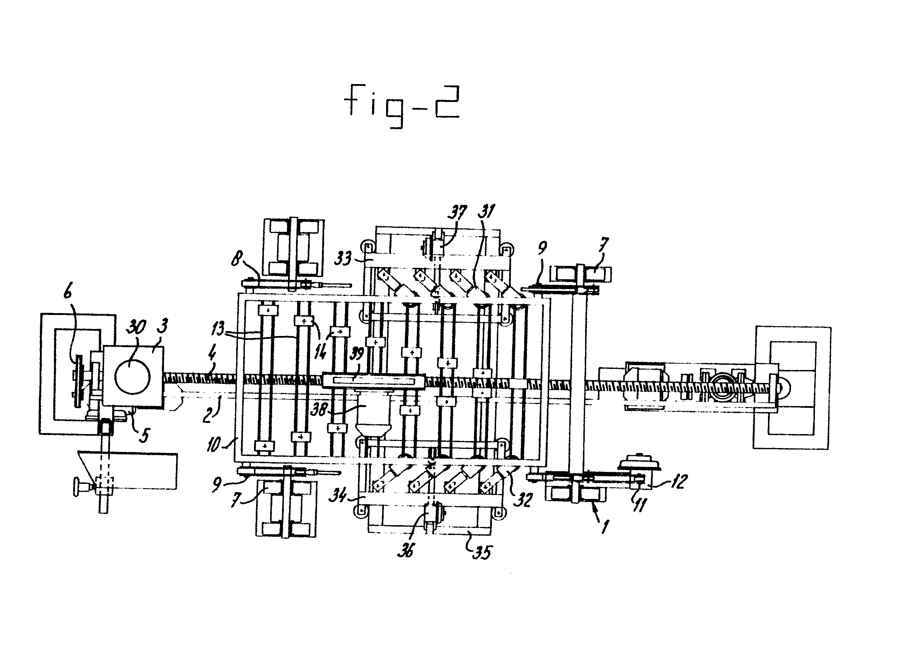

The device shown in Figs. 1 to 3 comprises a stand 1 with a guide track 2 for a table 3, which is also supported on a lead screw 4 with which the table can be moved from the lefthand position shown in Figs. 1 and 2 to the right, and back.

The lead screw is driven by means of a motor 5 and belt transmission 6.

Located at the top of the frame 1 are bearing blocks 7 in which are supported yokes 8 which on pins 9 carry a rectangular frame 10, and one of which at 11 is linked to a linear cylinder 12. Due to retraction produced by this motor the frame is raised and it is lowered by extension. This rectangular frame 10 has a number of carriers 13 running crosswise, to which supports 14 can be attached and fixed in adjustable fashion. Fixed to each support 14 is a swivel arm 15, which can swivel about the shaft 16 whose axis is at right angles to the direction of movement of the table· 3. The freedom of movement, i.e. the swivel range of the arm 15, is limited by stops which are not illustrated. The open position shown in Fig. 1 is the starting position.

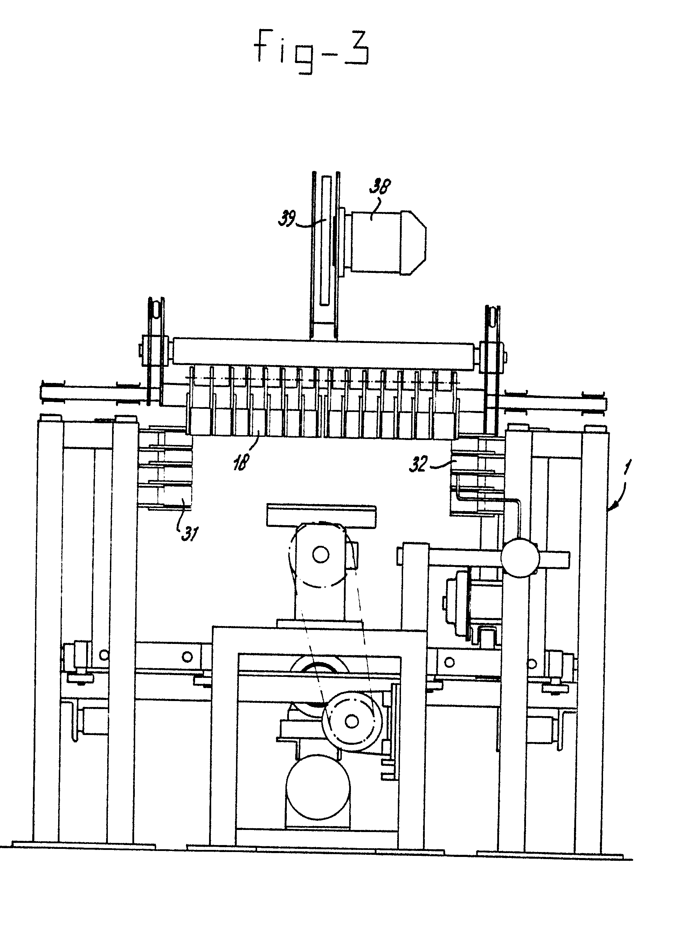

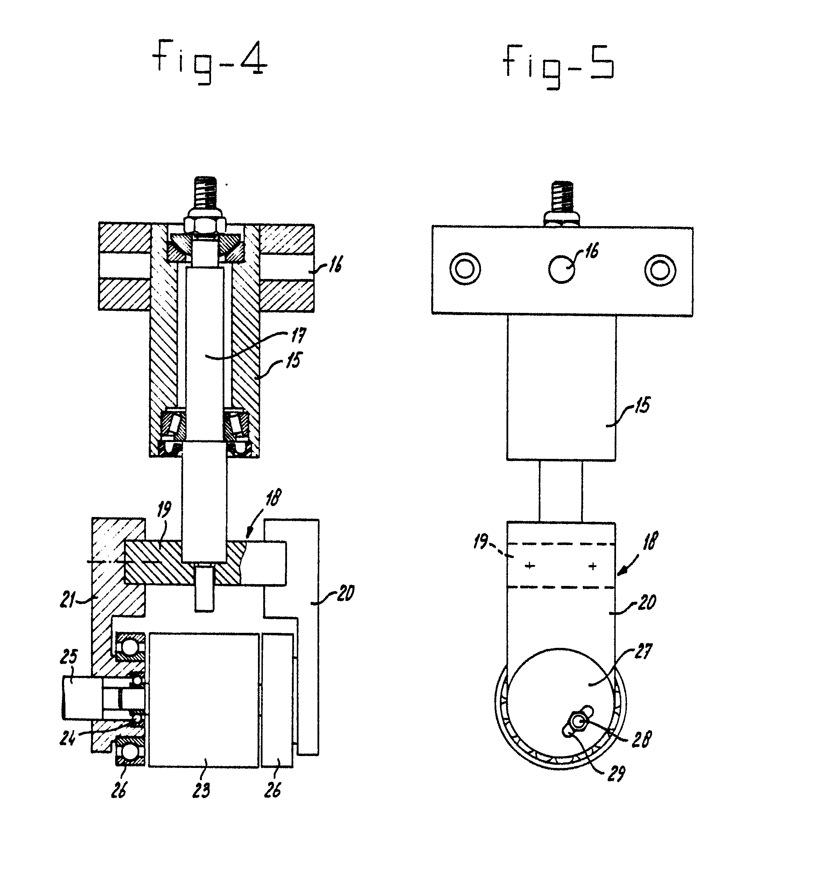

As can be seen from Fig. 4, a pin 17 is rotatably mounted in the swivel arm 15, and this pin carries an essentially U-shaped bracket 18, consisting of a top part 19 and two side pieces 20 and 21, between which a cutter 23 is supported by means of the ball bearings 24. The cutter is driven by means of the flexible shaft, which is indicated by 25.

Reference number 26 is a ball bearing which serves as a spacer from the surface of the cheese.

Instead of such a ball bearing, one can also use an adjustable disc 27 of the type shown in Fig. 5, said disc being vertically adjustable and capable of being fixed by a bolt 28 in a slotted hole 29. This spacer ensures in the known way that the cutter does not slice too deeply.

The table has a middle section 30 which is porous and forms the top wall of a cabinet which can be connected to a vacuum source. In this way a cheese placed on the table can be held fast.

The side faces can be worked with correspondingly designed derinding elements 31 and 32 which can be swung individually by means of springs (not illustrated) into the working position, and which are swivellably mounted in a manner comparable to that of the top derinding elements 18 in frames 33 and 34, said frames 33,34 being guided movably on a fixed stand section 35, and being connected by means 36 and 37 for producing a crosswise movement.

Located at the top of the frame 10 is a motor 38 with a driving gearbox 39 which, as shown in Fig. 1, has a large number of outlets 40. The number of outlets corresponds to the number of derinding elements for top face and side faces. From these outlets run individual flexible shafts, one of which is indicated by dotted lines at 41, to the respective derinding elements, where they are connected to a cylindrical cutter in the manner shown in Fig. 1.

Since each derinding element, in other words each cutter, swivels freely about its swivelling shaft 16 and is freely adjustable about its rotation pin 17, which lies in a plane parallel to the direction of movement of the table and thus of the cheese, these derinding elements can adapt freely to the surface of the cheese.

## CLAIMS

1. Device for the removal of the rind from a cheese, comprising a stand with a table to support the cheese to be treated, said table being movable along a track in the stand, which is also provided with several derinding elements, each consisting of an essentially cylindrical member with several cutting edges distributed over the periphery, and with a supporting element on either side of each cylindrical member, said cylindrical members being drivable and rotating then about shafts at right angles to the direction of movement of the table, while the derinding elements are thereby fixed to arms so as to swivel towards or away from the surface of the cheese to be treated, said arms themselves being swivellable about shafts which are also at right angles to the direction of movement of the table, and several derinding elements being set up in succession with overlapping of their respective tracks in such a way that a group of derinding elements can process one entire face of the cheese, characterised in that each derinding element is an independent element with its own single swivel arm to which the derinding element is fixed so as to swivel freely about a shaft which coincides with the longitudinal axis of the arm, and which is at right angles to the swivelling shaft, and each cylindrical member with cutting edges of each derinding element is independently drivable in such a way that the freedom of movement of the derinding element relative to the swivelling shaft and relative to the shaft standing at right angles thereto is not impeded.

2. Device according to Claim 1, in which the cylindrical members

**0168117**

with cutting edges are drivable by means of a flexible shaft, characterised in that each cylindrical member is linked with its own flexible shaft and the flexible shafts of all cylindrical members are connected to the outlets of a drive mechanism.

3. Device according to Claim 1 or Claim 2, characterised in that each cylindrical member is supported in a U-shaped bracket whose base is rotatably mounted with a pin in the swivel arm.

4. Device according to one or more of the preceding claims, characterised in that the cylindrical member with cutting edges is an ordinary metal milling cutter.

5. Device according to Claim 4, characterised in that the metal milling cutter is of the type with series of helical cutting teeth where the cutting teeth of the series following one another in the peripheral direction overlap in planes at right angles to the axis of rotation.

6. Device according to one or more of the preceding claims, characterised in that the derinding elements gripping the side edge(s) of a cheese are held in their working position by spring pressure.

7. Device according to one or more of the preceding claims, characterised in that the table has a permeable top face and the space underneath can be connected to a vacuum source.

8. Device according to one or more of the preceding claims, characterised in that the derinding elements operating on the top face of a cheese are placed in a frame which can move up and down.

9. Device according to one or more of the preceding claims, characterised in that the derinding elements gripping the side of a cheese are supported in a frame which is movable crosswise.

10. Device according to one or more of the preceding claims, characterised in that the frame of the top derinding elements or the frame(s) of the derinding elements operating at the sides have several carriers which are positioned crosswise to the direction of movement of the table and which are disposed at intervals one after the other in the direction of movement of the table, and on each of these carriers one or more derinding elements can be fitted so as to slide in the crosswise direction and be fixed.

11. Device according to one or more of the preceding claims, characterised in that the table can be moved to and fro in a straight line and means are provided for turning over a partially worked cheese, and if necessary through $90^{\circ}$.

12. Device according to one or more of the preceding claims, characterised in that the table is a rotary table.

----

Fig-1

Fig-2

# Fig-3

# fig-4

# fig-5

## EUROPEAN SEARCH REPORT

European Patent Office

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| D,A | NL-A-7 713 110  (C. WILHELM)<br><br>& GB - A - 2 008 933 | | A 01 J 27/00 |
| A | FR-A-2 488 157  (R. BADET) | | |
| A | DE-A-3 305 668  (DMV-CAMPINA B.V.) | | |
| A | NL-C- 47 642  (FRIESCHE COÖPERATIEVE ZUIVEL-EXPORT VEREENIGING) | | |

TECHNICAL FIELDS SEARCHED (Int Cl 4)

A 01 J

The present search report has been drawn up for all claims

| Place of search | Date of completion of the search | Examiner |
|---|---|---|
| THE HAGUE | 23-09-1985 | NIEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82